# EUROPEAN PATENT SPECIFICATION

(11) **EP 2 996 867 B1**
(45) Date of publication and mention of the grant of the patent: **19.09.2018**
(21) Application number: 14730363.0
(22) Date of filing: 15.05.2014
(51) Int. Cl.: B29D 11/00

(54) **METHOD OF PREPARING AN ARTICLE AND ARTICLE PREPARED THEREBY**
VERFAHREN ZUR HERSTELLUNG EINES ARTIKELS UND IN DIESEM VERFAHREN HERGESTELLTER ARTIKEL
PROCÉDÉ DE PRÉPARATION D'UN ARTICLE ET ARTICLE AINSI PRÉPARÉ

(30) Priority: 17.05.2013 US 201361824425 P
(43) Date of publication of application: 23.03.2016
(73) Proprietor: Dow Silicones Corporation, Midland, MI 48686-0994 (US)
(72) Inventor: AMB, Chad, Martin, Midland, MI 48642 (US); SWATOWSKI, Brandon, Midland, MI 48642 (US); WEIDNER, William, Kenneth, Bay City, MI 48708 (US)
(74) Representative: Murgitroyd & Company
(86) International application number: PCT/US2014/038149
(87) International publication number: WO 2014/186549

(56) References cited:
- US-A- 6 027 672
- US-A1- 2005 058 420
- US-A1- 2007 258 691

## Description

The present invention generally relates to a method of preparing an article and, more specifically, to a method of preparing an article having different refractive indices and to the article prepared thereby.

Optical articles are utilized in numerous applications. Types of optical articles include a waveguide and waveguide interconnect, both of which are utilized to guide waves, e.g. electromagnetic waves. Such waveguides and waveguide interconnects are increasingly important in the electronics industry.

In conventional methods of preparing conventional waveguides, a bottom clad is formed and cured. A core layer is formed on the bottom clad and selectively cured, leaving uncured portions in the core layer. The uncured portions of the core layer must be removed via etching in these conventional methods prior to forming a top clad layer on the core layer. More specifically, the uncured portions of the core layer must be physically removed because the core layer has a higher refractive index than the bottom and top clad, and failure to physically remove the uncured portions traditionally results in an undesirable refractive index profile within the waveguide. Etching may be carried out via a wet method using a solvent (e.g. an organic solvent or aqueous base) to dissolve away and physically remove the uncured portions or via a dry method (e.g. using plasma or reactive ions) to generate products that are physically removed. However, such etching steps contribute significantly to the cost and time associated with the fabrication of waveguides. US2005/0058420 may be useful in understanding the invention.

### SUMMARY OF THE INVENTION

The present invention provides a method of preparing an article. The method comprises applying a first composition having a first refractive index (RI¹) on a substrate to form a first layer comprising the first composition on the substrate. The method further comprises applying a curing condition to a discrete target portion of the first layer, without applying the curing condition to a non-target portion of the first layer, to form a contrast layer including at least one cured portion and at least one uncured portion. In addition, the method comprises applying a second composition having a second refractive index (RI²) on the contrast layer to form a second layer. The method further comprises mixing at least a portion of the second layer and the at least one uncured portion of the contrast layer to form at least one intermixed portion having a third refractive index (RI³). The first and second compositions and the at least one intermixed portion are different from one another. RI¹, RI², and RI³ are different from one another when measured at the same wavelength light and temperature. The method further comprising curing the second layer and the at least one intermixed portion of the contrast layer, thereby forming an article sequentially comprising the substrate, contrast layer including the at least one cured portion and at least one cured intermixed portion, wherein the cured portions and the cured intermixed portions are arrayed in an alternating arrangement in the contrast layer, and a cured second layer.

The method of the invention prepares articles having excellent optical and physical properties at a lesser cost and with fewer steps than conventional methods require to prepare conventional articles. The invention article produced via the invention method is suitable for use in numerous end uses and applications.

Preferred embodiments of the invention are set forth in the dependent claims.

Associated methods are also described herein to aid the understanding of the invention, but these do not form part of the claimed invention.

Examples or embodiments described herein which do not fall under the definition of the claims do not form part of the present invention.

### BRIEF DESCRIPTION OF THE DRAWINGS

Other advantages and aspects of this invention may be described in the following detailed description when considered in connection with the accompanying drawings wherein:
Figure 1 is a schematic cross-sectional view of one embodiment of an article; and
Figure 2 is another schematic cross-sectional view of another embodiment of an article.

### DETAILED DESCRIPTION OF THE INVENTION

The present invention provides a method of preparing an article. The method of the present invention prepares articles having excellent optical and physical properties. For example, the method is particularly suitable for preparing optical articles, such as waveguides. However, the method is not limited to such optical articles and may be utilized to form articles suitable for use in numerous different applications, whether or not a contrast in refractive index is desired or used.

The method comprises applying a first composition having a first refractive index (RI¹) on a substrate to form a first layer comprising the first composition on the substrate. The first composition is a curable composition and may be selected based at least on the desired first refractive index and other factors, e.g. desired cure mechanism, as described below.

The first composition may be applied on the substrate via various methods. For examplethe step of applying the first composition on the substrate comprises a wet coating method. Specific examples of wet coating methods suitable for the method include dip coating, spin coating, flow coating, spray coating, roll coating, gravure coating, sputtering, slot coating, and combinations thereof.

The substrate may be rigid or flexible. Examples of suitable rigid substrates include inorganic materials, such as glass plates; glass plates comprising an inorganic layer; ceramics; wafers, such as silicon wafers, and the like. In other examples, it may be desirable for the substrate to be flexible. In these examples, specific examples of flexible substrates include those comprising various organic polymers. From the view point of transparency, refractive index, heat resistance and durability, specific examples of flexible substrates include those comprising polyolefins (polyethylene, polypropylene, etc.), polyesters (poly(ethylene terephthalate), poly(ethylene naphthalate), etc.), polyamides (nylon 6, nylon 6,6, etc.), polystyrene, poly(vinyl chloride), polyimides, polycarbonates, polynorbornenes, polyurethanes, poly(vinyl alcohol), poly(ethylene vinyl alcohol), polyacrylics, celluloses (triacetylcellulose, diacetylcellulose, cellophane, etc.), or interpolymers (e.g. copolymers) of such organic polymers. As understood in the art, the organic polymers recited above may be rigid or flexible. Further, the substrate may be reinforced, e.g. with fillers and/or fibers. The substrate may have a coating thereon, as described in greater detail below. The substrate may be separated from the article to give another invention article sequentially comprising the contrast layer and cured second layer and lacking the substrate, if desired, or the substrate may be an integral portion of the article.

The method further comprises applying a curing condition to a discrete target portion of the first layer, without applying the curing condition to a non-target portion target portion of the first layer, to form a contrast layer including at least one cured portion and at least one uncured portion. The step of applying the curing condition to the discrete target portion of the first layer, without applying the curing condition to a non-target portion of the first layer, may alternatively be referred to herein as "selectively curing" the first layer. Generally, the contrast layer includes a plurality of cured portions and a plurality of uncured portions, and the first layer may include a plurality of target portions and a plurality of non-target portions for forming the cured portions and uncured portions of the contrast layer, receptively. For purposes of clarity, the at least one cured portion may be referred to herein merely as "the cured portion," and the at least one uncured portion may be referred to herein merely as "the uncured portion," and this terminology encompasses where the contrast layer includes more than one cured portion and/or more than one uncured portion, respectively.

The method by which the first layer is selectively cured, and thus the curing condition utilized, is determined by at least the first composition. For example, in certain embodiments, the first composition and the first layer formed from the composition are curable upon exposure to active-energy rays, i.e., the first layer is selectively cured by selectively irradiating the first layer with active-energy rays. The active-energy rays may comprise ultraviolet rays, electron beams, or other electromagnetic waves or radiation. Alternatively, the first layer may be thermally cured. In these embodiments, the first layer is selectively cured by selectively heating the first layer, e.g. selectively heating the first layer with a heating element. Examples of suitable heating elements include resistive or inductive heating elements, infrared (IR) heat sources (e.g., IR lamps), and flame heat sources. An example of an inductive heating element is a radio frequency (RF) induction heating element.

Irradiation is typically preferred due to the ease with which the first layer may be selectively cured by applying a curing condition to a target portion of the first layer, without applying the curing condition to a non-target portion of the first layer. In these embodiments, a photomask is typically utilized in the selective curing of the target portion of the first layer. Photomasks generally have a defined pattern for transmitting active-energy rays therethrough and a complementary pattern for blocking transmission of active-energy rays. For example, the photomask includes portions that allow for active-energy rays to pass therethrough, and portions that block active-energy rays from passing therethrough, such that the defined pattern can be transferred via selectively curing. The portions of the photomask that allow for active-energy rays to pass therethrough are aligned with the target portion of the first layer, and the complementary portions of the photomask that block transmission of active-energy rays are aligned with the non-target portion of the first layer. When irradiation is utilized to selectively cure the first layer, the first composition may be referred to as a photoresist, and the photoresist may be a positive resist or a negative resist. Such a method may be referred to as photolithography. Alternatively, when heat is utilized in the selective curing of the target portion of the first layer, a heatmask or thermal insulator template may be utilized in a fashion similar to the photomask. In particular, the heatmask may include portions that allow for the target portion of the first layer to be selectively cured to form the cured portion of the contrast layer while isolating the non-target portion of the first layer such that the non-target portion remains uncured in the contrast layer after selectively curing the contrast layer.

A source of ultraviolet radiation may comprise a high-pressure mercury lamp, medium-pressure mercury lamp, Xe-Hg lamp, or a deep UV lamp.

The step of selectively curing the first layer generally comprises exposing the target portion of the first layer to radiation at a dosage sufficient to form the cured portion of the contrast layer. The dosage of radiation for selectively curing the first layer is typically from 100 to 8000 millijoules per centimeter squared (mJ/cm²). In certain embodiments, heating may be used in conjunction with irradiation for selectively curing the first layer. For example, the first layer may be heated before, during, and/or after irradiating the first layer with active-energy rays. While active energy-rays generally initiate curing of the first layer, residual solvents may be present in the first layer, which may be volatilized and driven off by heating. Typical heating temperatures are in the range of from 50 to 200 degrees Celsius (°C). If heat is utilized prior to irradiation, the heating step may be referred to as a pre-baking step, and is generally utilized only to remove any residual solvent from the first layer. Said differently, heat is generally utilized in the pre-baking step only for removing solvent, but not for curing or selectively curing. Curing refers to cross-linking via forming covalent bonds between molecules.

In addition, the method comprises applying a second composition having a second refractive index (RI²) on the contrast layer to form a second layer. RI² and RI¹ are different from one another. RI² may be greater than or less than RI¹. The actual values corresponding to RI² and RI¹ are not particularly important so long as there is a difference between RI² and RI¹.

The second composition may be applied on the contrast layer by any of the wet coating methods introduced above relative to the first composition. The steps of applying the first and second compositions may be the same as or different from one another.

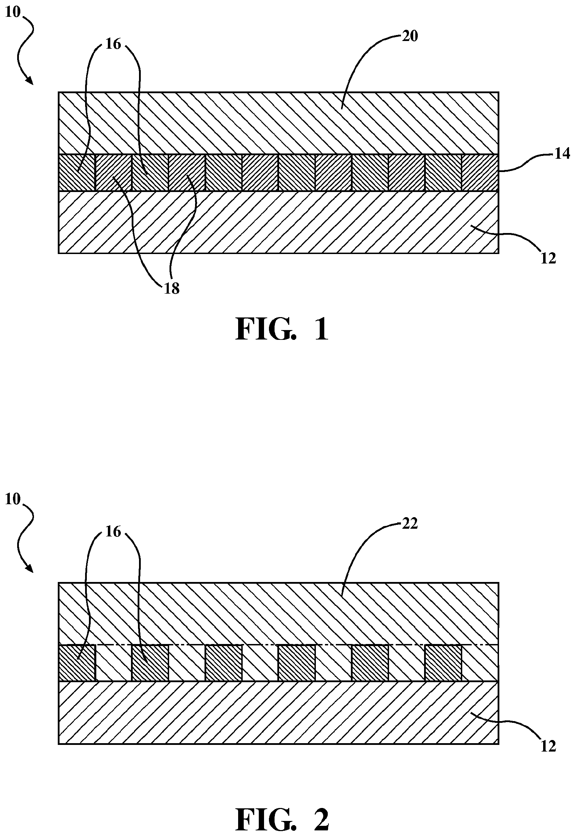

Figure 1 represents an article 10 immediately upon application of the second composition on the contrast layer. For example, immediately upon application of the second composition on the contrast layer, the article comprises sequentially the substrate 12, the contrast layer 14 including the cured portion 16 and the uncured portion 18, and the second layer 20. As shown in Figure 1, the cured portion 16 and the uncured portion 18 of the contrast layer 14 are arrayed in an alternating arrangement in the contrast layer 14.

When the second composition is applied on the contrast layer to form the second layer on the contrast layer, a portion of the second layer and the at least one uncured portion of the contrast layer intermix to form at least one intermixed portion having a third refractive index (RI³). RI¹, RI², and RI³ are different from one another when measured at a same wavelength light and temperature. Further, the first and second composition and the at least one intermixed portion are different from one another, as described below. The at least one intermixed portion may be referred to herein merely as "the intermixed portion," which encompasses where more than one intermixed portion is formed. More than one intermixed portion is typically formed when the contrast layer includes more than one uncured portion.

The intermixed portion may be located in the contrast layer or in both the contrast layer and the second layer once the portion of the second layer and the at least one uncured portion of the contrast layer intermix. In certain examples, the first composition, which is present in the uncured portion of the contrast layer, and the second composition, which is utilized to form the intermixed portion of the contrast layer and the second layer, fully intermix and become homogenous. In these examples, the intermixed portion of the contrast layer and the second layer are the same and are continuous. For example, as shown in Figure 2, when the intermixed portion of the contrast layer and the second layer are the same and continuous, the article comprises sequentially the substrate 12, the cured portion 16 of the contrast layer (which no longer has a defined upper boundary, as represented by a phantom line in Figure 2), and the intermixed portion of the contrast layer and the second layer, which intermixed portion and second layer are continuously shown at 22.

The intermixed portion may be naturally formed upon applying the second composition on the contrast layer, i.e., the intermixed portion may be formed in the absence of any additional steps beyond applying the second composition on the contrast layer. Alternatively, the intermixed portion may be formed or accelerated by mechanical and/or thermal manipulation. For example, the uncured portion of the contrast layer and the portion of the second layer may be manually mixed or mixed via mechanical mixing to accelerate the formation of the intermixed portion. Alternatively, the uncured portion of the contrast layer and the portion of the second layer may be agitated, optionally in the presence of heat, to accelerate mixing and the formation of the intermixed portion. Such agitation generally results in the intermixed portion being homogenous, which is desirable. In certain embodiments, the intermixed portion is formed by thermally agitating at least the contrast layer and the second layer. Generally, a composite including the substrate, the contrast layer, and the second layer is agitated, although the portions of the composite that are already cured (e.g. the substrate and the cured portion of the contrast layer) are not generally impacted by such agitation.

In certain embodiments, the method further comprises curing the second layer and the at least one intermixed portion, thereby forming an article sequentially comprising the substrate, contrast layer including the at least one cured portion and at least one cured intermixed portion, and a cured second layer.

Curing the second layer and the intermixed portion generally leaves no uncured portions in the article. Said differently, the contrast layer no longer includes uncured portions, but instead includes cured intermixed portions. In certain embodiments, the contrast layer, once cured, comprises a plurality of cured portions and a plurality of cured intermixed portions, wherein the cured portions and the cured intermixed portions are arrayed in an alternating arrangement in the contrast layer.

The second layer and the intermixed portion may be cured via any suitable method, such as those described above relative to selectively curing the first layer. For example, if desired, the second layer and the intermixed portion may be cured by applying a curing condition to a target portion of the second layer and/or the intermixed portion, without applying the curing condition to a non-target portion of the second layer and/or the intermixed portion. In these examples, the selective curing of the second layer and/or the intermixed portion may similarly leave at least one cured portion and at least one uncured portion. In these examples, the uncured portion prepared by selectively curing the second layer and/or the intermixed portion may be cured; alternatively at least a portion of the uncured portion may be etched, i.e., physically removed from the article. The portion of the uncured portion may be etched via a wet method, e.g. with an organic solvent or aqueous base, alternatively via a dry method (e.g. with plasma or reactive ions). Such selective curing and subsequent etching of the second layer and the intermixed portion is typically carried out for fabrication of alignment features when the article is an optical article, as described below. Articles prepared by this method may be referred to as "dummy structures," which may be utilized to form a homogenous distribution of intermixed material along a set of optical articles, e.g. waveguides. In other examples, the second layer and the intermixed portion may be cured, which is generally distinguished from selectively curing, because the step of curing the second layer and the intermixed portion does not include any non-target portions that are not subjected to a curing condition. Therefore, photomasks or other tools suitable for aiding with selective curing are generally not utilized when curing the second layer and the intermixed portion, but may be utilized when selectively curing the second layer and the intermixed portion.

Typically, the first and second compositions are both curable upon exposure to active-energy rays. In these embodiments, heating may be used in conjunction with irradiation for selectively curing the second layer and the intermixed portion. For example, the second layer and the intermixed portion may be heated before, during, and/or after irradiation with active-energy rays. Heating serves to ensure any residual solvents, if utilized in the first and/or second compositions, are driven from the article, and serves to ensure that the respective layers of the article are fully crosslinked. Typical heating temperatures are in the range of from 50 to 200 °C. If heat is utilized prior to irradiation, the heating step may be referred to as a pre-baking step. If heat is utilized after irradiation, the heating step may be referred to as a post-baking step. The period of time associated with the pre-baking step and the post-baking step is typically independently from greater than 0 to 10, alternatively from greater than 0 to 5, minutes.

In addition or alternatively to the post-baking step, a secondary heating step may be utilized after irradiation to promote full crosslinking of the respective layers of the article. In these embodiments, the temperature is generally slightly higher than that of the pre-baking or post-baking steps, and the period of time associated with the secondary heating step is also generally longer than that of the pre-baking or post-baking steps. Temperatures are typically from 75 to 225 °C and the period of time is typically from 15 to 45 minutes in the secondary heating step. In certain examples, a composite including the substrate, the contrast layer, and the second layer are subjected to the secondary heating step after irradiation to aid in the curing of the second layer and the intermixed portion.

RI³ is generally derived from an average of the blend of the RI¹ (of the first composition) and RI² (of the second composition) and are different from one another. As such, RI¹ < RI3 < RI² or RI¹ > RI³ > RI². Most typically, the first and second compositions are selected such that RI¹ > RI³ > RI².

Notably, refractive index is generally a function of not only the substitution within the particular composition, but also of a cross-link density of the cured product. To this end, the refractive index of the cured portion of the contrast layer is generally greater than RI¹, or greater than the refractive index of the first composition utilized to form the contrast layer. However, the refractive index gradient of the article is generally maintained before and after curing. Said differently, the cured portion of the contrast layer may have a refractive index RI^{1'}, and the second layer, once cured, may have a refractive index RI^{2'}, but RI^{1'} and RI²' are different from one another, just as RI¹ and RI² are different from one another. For example, the first composition has refractive index RI¹, the cured portion of the contrast layer formed from the first composition has refractive index RI^{1'}, where RI^{1'} > RI¹ due to the increased crosslink density in the cured portion of the contrast layer as compared to the first composition. Similarly, the second composition has refractive index RI², the second layer formed from the second composition, once cured, has refractive index RI^{2'}, where RI^{2'} > RI² due to the increased crosslink density in the second layer as compared to the second composition. To this end, when RI¹ < RI², then RI^{1'} < RI^{2'}, and when RI¹ > RI², then RI^{1'} > RI^{2'}. The ratio of RI^{1'}/RI¹ may be the same as or different than the ratio of RI^{2'}/RI².

In certain embodiments, as described below, the article formed via the method is an optical article, such as a waveguide.

However, in contrast to conventional methods of preparing optical articles mentioned previously, in the method, the desired refractive index profile of the article is achieved even when uncured portions are not completely physically removed from the contrast layer. As such, in certain embodiments, the method is free from the step of etching the contrast layer to remove the uncured portion thereof. Instead, the uncured portion of the contrast layer ultimately forms the intermixed portion. In certain embodiments, the intermixed portion has a lesser refractive index than the cured portion of the contrast layer, which allows for the desirable refractive index profile of the article without requiring the material of the uncured portions to be completely physically removed. This reduces the time and cost associated with the method, and obviates the material loss associated with conventional methods. For example, in conventional methods mentioned previously, material ultimately is utilized in place of the etched material so as to achieve the desired refractive index profile of the article, which further adds to the cost of preparing conventional articles (in view of material loss and additional material requirements). Moreover, the method still prepares articles having excellent optical and physical properties while decreasing costs, time, and method steps associated therewith.

In embodiments in which the article formed via the method is an optical article, the substrate may comprise a bottom clad layer. In these embodiments, the method may further comprise the step of forming the bottom clad layer prior to the step of applying the first composition thereon. Alternatively, the bottom clad layer may be provided by purchasing or otherwise obtaining the bottom clad layer for subsequent use in the method. In these embodiments, the optical article may further comprise a support substrate for supporting the bottom clad layer, which may be any of the rigid or flexible substrates set forth above. The support substrate may be operatively contacted to, and/or removable or separable from the bottom clad layer when the optical article comprises both the support substrate and the bottom clad layer in the method.

When the substrate comprises the bottom clad layer and the article comprises the optical article, the cured portion of the contrast layer may be referred to as the core layer, and the second layer, once cured, forms a top clad layer.

In a method including the step of forming the bottom clad layer, the bottom clad layer is generally formed from an initial composition having a refractive index RI⁴. RI⁴ is different from RI¹. The initial composition may be the same as or different form the second composition and, in certain examples, RI⁴ ∼ RI². Regardless, when RI² < RI¹, then RI⁴ < RI¹. When RI² > RI¹, then RI⁴ > RI¹. The bottom clad layer may be independently formed from the methods described above relative to the first and second layers.

The dimensions of the layers of the article may vary based on an intended end use of the article. When the article comprises an optical article, the thickness of the cured portion of the contrast layer, which may alternatively be referred to as the core layer, is most relevant, with the thicknesses of the bottom clad layer and the second layer (or the top clad layer) being not particularly important. The thickness of the cured portion of the contrast layer is typically from 1 to 100, alternatively from 1 to 60, alternatively from 20 to 40, micrometers (µm). The thicknesses of the bottom clad and top clad layers may independently vary, for example from 1 to 100 micrometers.

As introduced above, the only limitations relative to the first and second compositions relate to their respective refractive indices. This is also true for the initial composition, when the method comprises the step of forming the bottom clad layer from the initial composition. For comparison purposes, the refractive indices are measured at a same temperature and wavelength of light in accordance with ASTM D542 - 00, optionally at a wavelength of 589.3 nm.

The second composition is generally miscible with the first composition to allow for the formation of the intermixed portion. When the first and second compositions are fully miscible with and in each other, the intermixed portion may be characterized as a homogenous blend of the first and second compositions. Alternatively, when the first and second compositions are not fully miscible with or in each other or are incompletely mixed, the mixing of the first and second compositions may form a non-homogenous intermixed portion such as a blend of first composition-second composition core-shell particles. Alternatively, the intermixed portion may be partially homogenous. Typically, the intermixed portion is the homogenous blend of the first and second compositions. Similarly, when the first and second compositions are fully miscible with and in each other, the second layer may be characterized as a homogenous blend of the first and second compositions, i.e., the second layer and the intermixed portion of the contrast layer may be continuous and homogenous. Alternatively, when the first and second compositions are not fully miscible with or in each other or are incompletely mixed, the second layer may comprise the second composition and the intermixed portion may comprise a blend of the first and second compositions. Even in the latter example, a blend of the first and second compositions may bleed from the intermixed portion of the contrast layer into the second layer, thus making the second layer only partially homogenous.

In certain embodiments, each of the first and second compositions is curable upon exposure to active-energy rays. However, if desired, any combination of curing mechanisms may be utilized in the method. For example, the first composition may be cured via irradiation, whereas the second composition may be cured thermally; or the first and second compositions may be cured via irradiation at different wavelengths; or the first composition may be cured via irradiation with applied heat, whereas the second composition may be cured via irradiation without applied heat or vice versa.

As set forth above, there are generally at least two ways in which a refractive index of a material may be modified. First, crosslink density of a material and its refractive index are generally directly proportional. As such, increasing a material's crosslink density (e.g., via curing) generally increases its refractive index. Second, organic substituents generally influence refractive index of a material. For example, a material that is aliphatically substituted (e.g., with methyl only) generally has a lesser refractive index than a material that is aromatically substituted (e.g., with phenyl and optionally methyl), all else being equal (e.g. equivalent crosslink densities between the materials). As such, utilizing aromatic groups in place of at least some aliphatic groups increases refractive index, and utilizing at least some aliphatic groups in place of aromatic groups lowers refractive index.

To this end, the first and second compositions are described collectively below (along with the initial composition, to the extent the initial composition is utilized in the method). However, based on the description above, one of skill in the art would understand based on the disclosure below how to obtain the first and second compositions, which have a different refractive index from one another.

In certain examples, the first and second compositions each include a cationic polymerizable material including at least one cationic polymerizable group. Cationic polymerizable materials are typically curable upon exposure to active-energy rays via a cationic reaction mechanism. The cationic polymerizable group may be a neutral moiety. That is, the term "cationic" modifies polymerizable rather than group. The cationic polymerizable group may be located at any position(s) of the cationic polymerizable material. For example, the cationic polymerizable group may be pendent from or a substituent of the cationic polymerizable compound. The at least one cationic polymerizable group is referred to herein merely as "the cationic polymerizable group," which, although singular, encompasses those in which the cationic polymerizable group includes more than one cationic polymerizable group, i.e., two or more cationic polymerizable groups. Typically, the cationic polymerizable material includes two or more cationic polymerizable groups, which are independently selected.

In certain examples, the cationic polymerizable group comprises a heterocyclic functional group, defined as a cyclic organic functional group including at least one heteroatom, such as S, N, O, and/or P; alternatively S, N, and/or O. For example, heterocyclic groups include, but are not limited to, lactone groups, lactam groups, cyclic ethers, and cyclic amines. Lactone groups are generally cyclic esters and may be selected from, for example, an acetolactone, a propiolactone, a butyrolactone, and a valerolactone. Lactam groups are generally cyclic amides and may be selected from, for example, a β-lactam, a γ-lactam, a δ-lactam and an ε-lactam. Specific examples of cyclic ethers include oxirane, oxetane, tetrahydrofuran, and dioxepane (e.g. 1,3-dioxepane). Additional examples of heterocyclic functional groups include thietane and oxazoline. Notably, the heterocyclic functional groups described above may also exist as monomers. However, in the context of the cationic polymerizable group, the heterocyclic functional groups set forth above are substituents of a larger molecule and not discrete monomers. Further, these groups may be bonded or connected to the cationic polymerizable material via a divalent linking group.

In other examples, the cationic polymerizable group may comprise a cationic polymerizable group other than a heterocyclic functional group. For example, the cationic polymerizable group may alternatively be selected from an ethylenically unsaturated group, such as a vinyl, a vinyl ether, a divinyl ether, a vinyl ester, a diene, a tertiary vinyl, a styrene, or a styrene-derivative group.

Combinations of different heterocyclic functional groups, or combinations of cationic polymerizable groups other than heterocyclic functional groups, or combinations of heterocyclic functional groups and cationic polymerizable groups other than heterocyclic functional groups, may be included in the cationic polymerizable material.

In certain examples in which the cationic polymerizable material is organic, the first and/or second compositions may independently comprise an olefinic or polyolefinic material. In other examples, the first and/or second compositions comprise an organic epoxy-functional material, such as an epoxy resin. Specific examples of epoxy resins include bisphenol-type epoxy resins, such as bisphenol-A type, bisphenol-F type, bisphenol-AD type, bisphenol-S type, and hydrogenated bisphenol-A type epoxy resin; a naphthalene-type epoxy resin; a phenol-novo lac-type epoxy resin; a biphenyl-type epoxy resin; a glycidylamine-type epoxy resin; an alicyclic-type epoxy resin; or a dicyclopentadiene-type epoxy resin. These epoxy resins can be used in combinations of two or more in each of the first and/or second compositions. Alternatively still, the first and/or second compositions may independently comprise a polyacrylic, a polyamide, a polyester, etc. or other organic polymeric material including the cationic polymerizable group. In these examples, the first and/or second compositions each independently comprise organic compositions. "Organic material," as used herein, is distinguished from a silicone material, with silicone materials having a backbone comprising siloxane bonds (Si-O-Si) and organic materials having a carbon-based backbone and lacking siloxane bonds.

In other embodiments, for increasing miscibility, the first and second compositions each independently comprise a silicone composition. If desired, the first composition may comprise a silicone composition and the second composition may comprise an organic composition, and vice versa. One of skill in the art can readily determine refractive index of a composition and determine miscibility between two compositions.

When the first and/or second compositions comprise silicone compositions, the first and/or second compositions comprise a silicone material. The silicone composition and the silicone material comprise organopolysiloxane macromolecules, wherein each macromolecule independently may be straight or branched. The silicone material may comprise any combination of siloxane units, i.e., the silicone material comprise any combination of R₃SiO_{1/2} units, i.e., M units, R₂SiO_{2/2} units, i.e., D units, RSiO_{3/2} units, i.e., T units, and SiO_{4/2} units, i.e., Q units, where R is typically independently selected from a substituted or unsubstituted hydrocarbyl group or cationic polymerizable group. For example, R may be aliphatic, aromatic, cyclic, alicyclic, etc. Further, R may include ethylenic unsaturation. By "substituted," it is meant that one or more hydrogen atoms of the hydrocarbyl may be replaced with atoms other than hydrogen (e.g. a halogen atom, such as chlorine, fluorine, bromine, etc.), or a carbon atom within the chain of R may be replaced with an atom other than carbon, i.e., R may include one or more heteroatoms within the chain, such as oxygen, sulfur, nitrogen, etc. R typically has from 1 to 10 carbon atoms. For example, R may have from 1 to 6 carbon atoms when aliphatic, or from 6 to 10 carbon atoms when aromatic. Substituted or unsubstituted hydrocarbyl groups containing at least 3 carbon atoms can have a branched or unbranched structure. Examples of hydrocarbyl groups represented by R include, but are not limited to, alkyl, such as methyl, ethyl, propyl, butyl, hexyl, heptyl, octyl, nonyl, decyl, and isomers of such groups; alkenyl, such as vinyl, allyl, and hexenyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups represented by R are exemplified by 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl. Examples of the cationic polymerizable group represented by R are set forth above.

When the silicone material is resinous, the silicone material may comprise a DT resin, an MT resin, an MDT resin, a DTQ resin, an MTQ resin, an MDTQ resin, a DQ resin, an MQ resin, a DTQ resin, an MTQ resin, or an MDQ resin. Combinations of different resins may be present in the silicone material. Moreover, the silicone material may comprise a resin in combination with a polymer.

In one specific embodiment, the silicone material comprises or consists of an organopolysiloxane resin. The organopolysiloxane resin may be represented by the following siloxane unit formula:

(R¹R²R³SiO_{1/2})ₐ(R⁴R⁵SiO_{2/2})_{b}(R⁶SiO_{3/2})_{c}(SiO_{4/2})_{d},

where R¹, R², R³, R⁴, R⁵, and R⁶ are independently selected from R, which is defined above; a+b+c+d=1; "a" on average satisfies the following condition: 0≤a<0.4; "b" on average satisfies the following condition: 0<b<1; "c" on average satisfies the following condition: 0<c<1; "d" on average satisfies the following condition; 0≤d<0.4; and "b" and "c" are bound by the following condition: 0.01≤b/c≤0.3. Subscripts a, b, c, and d designate an average mole number of each siloxane unit. Said differently, these subscripts represent an average mole % or share of each siloxane unit in one molecule of the organopolysiloxane resin. Because R¹⁻⁶ are independently selected from R, the siloxane unit formula above can be rewritten as follows:

(R₃SiO_{1/2})ₐ(R₂SiO_{2/2})_{b}(RSiO_{3/2})_{c}(SiO_{4/2})_{d},

where R is independently selected and defined above, and a-d are defined above.

Typically, in one molecule of the organopolysiloxane resin, siloxane units including a cationic polymerizable group constitute 2 to 50 mole% of total siloxane units. Further, in these examples, at least 15 mole% of all silicon-bonded organic groups comprise univalent aromatic hydrocarbon groups with 6 to 10 carbon atoms (e.g. aryl groups).

The organopolysiloxane resin contains (R⁴R⁵SiO_{2/2}) and (R⁶SiO_{3/2}) as indispensable units. However, the organopolysiloxane may additionally comprise structural units (R¹R²R³SiO_{1/2}) and (SiO_{4/2}). In other words, the epoxy-containing organopolysiloxane resin may be composed of the units shown in the following formulae:

(R⁴R⁵SiO_{2/2})_{b}(R⁶SiO_{3/2})_{c};

(R¹R²R³SiO_{1/2})ₐ(R⁴R⁵SiO_{2/2})_{b}(R⁶SiO_{3/2})_{c};

(R⁴R⁵SiO_{2/2})_{b}(R⁶SiO_{3/2})_{c}(SiO_{4/2})_{d};

or

(R¹R²R³SiO_{1/2})ₐ(R⁴R⁵SiO_{2/2})_{b}(R⁶SiO_{3/2})_{c}(SiO_{4/2})_{d}.

If the content of the (R¹R²R³SiO_{1/2}) units is too high, the molecular weight of the organopolysiloxane resin is reduced, and the following condition takes place: 0≤a<0.4. If (SiO_{4/2}) units are introduced under this condition, a cured product of the organopolysiloxane resin may become undesirably hard and brittle. Therefore, in certain examples, the following condition is met: 0≤d<0.4; alternatively 0≤d<0.2; alternatively d=0. The mole ratio b/c of the indispensable structural units (R⁴R⁵SiO_{2/2}) and (R⁶SiO_{3/2}) should be from 0.01 to 0.3, alternatively from 0.01 to 0.25, alternatively from 0.02 to 0.25. Because the organopolysiloxane resin contains (R⁴R⁵SiO_{2/2}) and (R⁶SiO_{3/2}) as indispensable units, the molecular structure may vary mainly between branched, net-like and three-dimensional.

The refractive index of the first and second compositions, when the first and second compositions each comprise the organopolysiloxane resin, may be selectively modified by changing R of the respective organopolysiloxane resin. For example, when a majority of R in the organopolysiloxane resin are univalent aliphatic hydrocarbon groups, such as methyl groups, the refractive index of the organopolysiloxane resin may be less than 1.5. Alternatively, if a majority of R in the organopolysiloxane resin are univalent aromatic hydrocarbon groups, such as phenyl groups, the refractive index may be greater than 1.5. This value can be readily controlled by substitution of the organopolysiloxane resin, or by inclusion of additional components in the first and/or second compositions, as described below. As such, in certain examples, the first composition comprises an organopolysiloxane resin including univalent aromatic hydrocarbon groups, whereas the second composition comprises an organopolysiloxane resin including univalent aliphatic hydrocarbon groups.

In various examples of the organopolysiloxane resin, siloxane units having a cationic polymerizable group constitute from 2 to 70, alternatively from 10 to 40, alternatively 15 to 40, mole% of all siloxane units. If such siloxane units are present in the organopolysiloxane resin in an amount below 2 mole%, this will lead to a decrease in a degree of cross-linking during curing, which decreases hardness of the cured product formed therefrom. If, on the other hand, the content of these siloxane units exceeds 70 mole% in the organopolysiloxane resin, the cured product may have reduced visible light transmittance, low resistance to heat, and increased brittleness. Typically, the cationic polymerizable groups are not directly bonded to silicon atoms of the organopolysiloxane resin. Instead, the cationic polymerizable groups are generally bonded to silicon atoms via a bivalent linking group, such as a hydrocarbylene, heterohydrocarbylene, or organoheterylene linking group.

For example, when the cationic polymerizable groups are cyclic ether groups, e.g. epoxy groups, specific examples of cationic polymerizable groups suitable for the organopolysiloxane resin are set forth immediately below:
3-(glycidoxy) propyl group: 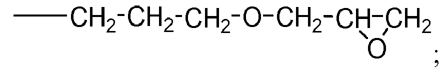
2-(glycidoxycarbonyl) propyl group: 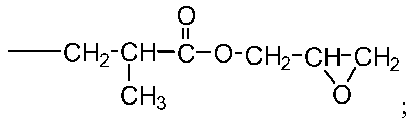
2-(3,4-epoxycyclohexyl) ethyl group: 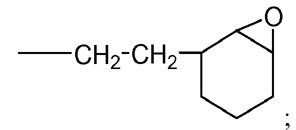 and
2-(4-methyl-3,4-epoxycyclohexyl) propyl group: 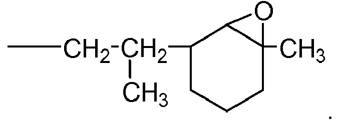
Additional examples of cyclic ether groups suitable for the cationic polymerizable group include the following: 2-glycidoxyethyl, 4-glycidoxybutyl, or similar glycidoxyalkyl groups; 3-(3,4-epoxycyclohexyl) propyl, or similar 3,4-epoxycyclohexylalkyl groups; 4-oxiranylbutyl, 8-oxiranyloctyl, or similar oxiranylalkyl groups. In these examples, the cationic polymerizable material may be referred to as an epoxy-functional silicone material.

Specific examples of cationic polymerizable groups other than the epoxy groups exemplified above include the following groups (with the left-most portion representing the bond connecting the particular cationic polymerizable group to the organopolysiloxane resin):

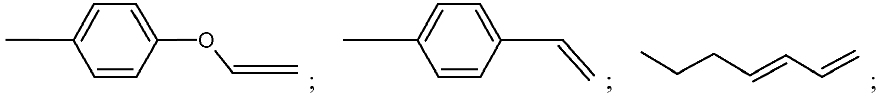

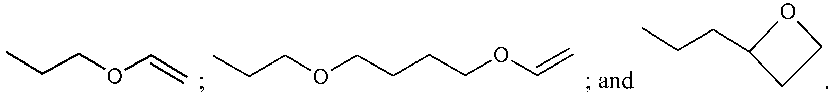

Specific examples of the organopolysiloxane resin when the cationic polymerizable groups are cyclic ether groups, e.g. epoxy groups, include organopolysiloxane resins comprising or consisting of the following sets of siloxane units: (Me₂SiO_{2/2}), (PhSiO_{3/2}), and (E¹SiO_{3/2}) units; (Me₃SiO_{1/2}), (Me₂SiO_{3/2}), (PhSiO_{3/2}), and (E¹SiO_{3/2}) units; (Me₂SiO_{2/2}), (PhSiO_{3/2}), (E¹SiO_{3/2}) and (SiO_{4/2}) units; (Me₂SiO_{2/2}), (PhSiO_{3/2}), (MeSiO_{3/2}), and (E¹SiO_{3/2}) units; (Ph₂SiO_{2/2}), (PhSiO_{3/2}), and (E¹SiO_{3/2}) units; (MePhSiO_{2/2}), (PhSiO_{3/2}), and (_{E}¹SiO_{3/2}) units; (Me₂SiO_{2/2}), (PhSiO_{3/2}), and (E²SiO_{3/2}) units; (Me₂SiO_{2/2}), (PhSiO_{3/2}), and (E³SiO_{3/2}) units; (Me₂SiO_{2/2}), (PhSiO_{3/2}), and (E⁴SiO_{3/2}) units; (MeViSiO_{2/2}), PhSiO_{3/2}), and (E³SiO_{3/2}) units; (Me₂SiO_{2/2}), (PhSiO_{3/2}), (MeSiO_{3/2}), and (E³SiO_{3/2}) units; (Ph₂SiO_{2/2}), (PhSiO_{3/2}), and (E³SiO_{3/2}) units; (Me₂SiO_{2/2}), (Ph₂SiO_{2/2}), and (E¹SiO_{3/2}) units; (Me₂SiO_{2/2}), (Ph₂SiO_{2/2}), and (E³SiO_{3/2}) units; (Me₂ViSiO_{1/2}), (Me₂SiO_{2/2}), (PhSiO_{3/2}), and (E¹SiO_{3/2}) units; (Me₃SiO_{1/2}), (Ph₂SiO_{2/2}), (PhSiO_{3/2}), and (E¹SiO_{3/2}) units; (Me₃SiO_{1/2}), (Me₂SiO_{2/2}), (PhSiO_{3/2}), and (E³SiO_{3/2}) units; (Me₂SiO_{2/2}), (PhSiO_{3/2}), (E³SiO_{3/2}), and (SiO₂) units; (Me₂SiO_{2/2}), (Ph₂SiO_{2/2}), (E¹SiO_{3/2}), and (SiO₂) units; (Me₃SiO_{1/2}), (Me₂SiO_{2/2}), (PhSiO_{3/2}), (E¹SiO_{3/2}), and (SiO₂) units; and (Me₃SiO_{1/2}), (Me₂SiO_{2/2}), (PhSiO_{3/2}), (E³SiO_{3/2}), and (SiO₂) units; where Me designates a methyl group, Vi designates a vinyl group, Ph designates a phenyl group, E¹ designates a 3-(glycidoxy)propyl group, E² designates a 2-(glycidoxycarbonyl)propyl group, E³ designates a 2-(3,4-epoxycyclohexyl)ethyl group, and E⁴ designates 2-(4-methyl-3,4-epoxycyclohexyl) propyl group. The same designations are applicable to the following description herein. It is contemplated that any of the univalent hydrocarbon substituents exemplified in the organopolysiloxane resins above (e.g. Me, Ph, and Vi) may be replaced by other univalent hydrocarbon substituents. For example, an ethyl group or other substituted or unsubstituted hydrocarbyl group may be utilized in place of any of the methyl, phenyl, or vinyl groups above. Further, cationic polymerizable groups other than E¹-E⁴ may be utilized in place of or in addition to E¹-E⁴. However, the species of organopolysiloxane resin identified above are particularly desirable due to their refractive index values and physical properties.

The organopolysiloxane resin may have some residual silicon-bonded alkoxy groups and/or silicon-bonded hydroxyl groups (i.e., silanol groups) from its preparation. The content of these groups may depend on the method of manufacture and manufacturing conditions. These substituents may affect storage stability of the organopolysiloxane resin and reduce thermal stability of the cured product formed from the organopolysiloxane resin. Therefore, in certain examples, it is desirable to restrict the formation of such groups. For example, the amount of silicon-bonded alkoxy groups and silicon-bonded hydroxyl groups can be reduced by heating the organopolysiloxane resin in the presence of a minute quantity of potassium hydroxide, thus causing a dehydration and condensation reaction or a de-alcoholation and condensation reaction. It is recommended that the content of these substituents be no more than 2 mole% and preferably no more than 1 mole% of all substituents on silicon atoms.

Although there are no special restrictions with regard to the number-average molecular weight (Mₙ) of the organopolysiloxane resin, the organopolysiloxane resin has, in certain examples, a Mₙ between 10³ and 10⁶ Daltons.

In certain examples, the first and/or second compositions may not, alternatively may, further comprise a diluent component. In certain examples, the diluent component comprises a silane compound having a single (only one) silicon-bonded cationic polymerizable group.

The single silicon-bonded cationic polymerizable group may be any of the cationic polymerizable groups described above.

The silane compound generally has a dynamic viscosity of less than 1,000, alternatively less than 500, alternatively less than 100, alternatively less than 50, alternatively less than 25, alternatively less than 10, centipoise (cP) at 25 °C. Dynamic viscosity may be measured with a Brookfield Viscometer, an Ubbelohde tube, cone/plate rheology, or other apparatuses and methods. Although the values may vary slightly based on the instrument/apparatus utilized, these values are generally maintained regardless of measurement type. In these examples, the silane compound has a boiling point temperature of at least 25, alternatively at least 50, alternatively at least 75, alternatively at least 80, alternatively at least 85, alternatively at least 90, °C at a pressure of 1 mm Hg (133.32 Pascals). In certain examples, the silane compound has a boiling point temperature of from 80 to 120, alternatively from 90 to 110, °C at a pressure of 1 mm Hg.

In certain examples, the silane compound of the diluent component is free from any silicon-bonded hydrolysable groups other than potentially the cationic polymerizable group. For example, certain silicon-bonded hydrolysable groups, such as silicon-bonded halogen atoms, react with water to form silanol (SiOH) groups, wherein the silicon-halogen bond has been cleaved. Other silicon-bonded hydrolysable groups, such as a carboxylic ester, may hydrolyze without cleaving any bond to silicon. To this end, in certain examples, the silane compound is free from any silicon-bonded hydrolysable groups that may hydrolyze to form silanol groups. In other examples, the cationic polymerizable group of the silane compound is not hydrolysable such that the silane compound is free from any silicon-bonded hydrolysable groups altogether. In these examples, the cationic polymerizable group is not hydrolysable, e.g. the cationic polymerizable group is a cyclic ether. Specific examples of hydrolysable groups include the following silicon-bonded groups: a halide group, an alkoxy group, an alkylamino group, a carboxy group, an alkyliminoxy group, an alkenyloxy group, and an N-alkylamido group. For example, certain conventional silane compounds may have, in addition to more than one cationic polymerizable group, a silicon-bonded alkoxy group. Such silicon-bonded alkoxy groups of these conventional silane compounds may hydrolyse and condense, forming siloxane bonds and increasing a cross-link density of the cured product. In contrast, the silane compound is generally utilized to reduce a cross-link density of the cured product, and thus these hydrolysable groups are, in certain examples, undesirable.

In various examples, the silane compound of the diluent component has the following general formula: 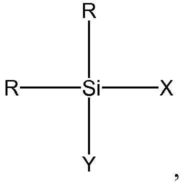 where R is independently selected and defined above, Y is the cationic polymerizable group, and X is selected from R and SiR₃.

In certain examples, X is R such that the silane compound comprises a monosilane compound. In these examples, the silane compound has the general formula YSiR₃, where Y and R are defined above. When Y is independently selected from E¹-E⁴ above, the silane compound may be rewritten as, for example, E¹SiR₃, E²SiR₃, E³SiR₃, and E⁴SiR₃. Of E¹-E⁴, E³ is most typical.

In other examples, X is SiR₃ such that the silane compound comprises a disilane compound. In these examples, the single cationic polymerizable group may be bonded to either silicon atom of the disilane, which silicon atoms are typically directly bonded to one another. Although R is independently selected from substituted and unsubstituted hydrocarbyl groups, R is most typically selected from alkyl groups and aryl groups for controlling the refractive index.

Specific examples of the silane compound and methods of their preparation are described in co-pending Application Ser. No. 61/824,424.

The silane compound may effectively solubilize the cationic polymerizable material, e.g. the organopolysiloxane resin, thus obviating the need for another solvent. In some examples, the first and/or second compositions lack a solvent other than the silane compound. The silane compound also reduces the refractive index of first and/or second compositions, if present therein, and thus the relative amount of the silane compound utilized may be modified to selectively control the refractive index of the first and/or second compositions. For example, the first composition may utilize the silane compound in a lesser amount than the second composition, thereby imparting the second composition with a lesser refractive index than the first composition, all else being equal (e.g. the particular organopolysiloxane resin utilized).

The diluent component typically comprises the silane compound in an amount based on the desired refractive index and other physical properties of the first and/or second compositions. For example, in certain examples, the diluent component comprises the silane compound in an amount sufficient to provide at least 3, alternatively at least 5, alternatively at least 10, alternatively at least 15, alternatively at least 20, alternatively at least 25, alternatively at least 30, percent by weight of the silane compound based on the total weight of the second composition. The silane compound is generally present in a lesser amount in the first composition than in the second composition, if utilized in both.

The diluent component may not, alternatively may, comprise compounds or components in addition to the silane compound. For example, the diluent component may comprise a diluent compound other than and in addition to the silane compound. The diluent compound may differ from the silane compound in various respects. For example, the diluent compound may have more than one cationic polymerizable group. Alternatively, the diluent compound may have a single cationic polymerizable group, but may be free from silicon. The diluent component may comprise more than one diluent compound, i.e., the diluent component may comprise any combination of diluent compounds. The diluent compound may be aromatic, alicyclic, aliphatic, etc.

Specific examples of aromatic diluent compounds suitable for the diluent component include polyglycidyl ethers of polyhydric phenols each having at least one aromatic ring, or of alkylene oxide adducts of the phenols such as glycidyl ethers of bisphenol A and bisphenol F, or of compounds obtained by further adding alkylene oxides to bisphenol A and bisphenol F; and epoxy novolak resins.

Specific examples of alicyclic diluent compounds suitable for the diluent component include polyglycidyl ethers of polyhydric alcohols each having at least one alicyclic ring; and cyclohexene oxide- or cyclopentene oxide-containing compounds obtained by epoxidizing cyclohexene ring- or cyclopentene ring-containing compounds with oxidants. Examples include a hydrogenated bisphenol A glycidyl ether, 2-(3,4-epoxycyclohexyl-5,5-spiro-3,4-epoxy)cyclohexane-methadioxane, bis(3,4-epoxycyclohexylmethyl)adipate, vinylcyclohexene dioxide, 4-vinylepoxycyclohexane, bis(3,4-epoxy-6-methylcyclohexylmethyl)adipate, 3,4-epoxy-6-methylcyclohexylcarboxylate, dicyclopentadienediepoxide, ethyleneglycol di(3,4-epoxycyclohexylmethyl)ether, dioctyl epoxyhexahydrophthalate and di-2-ethylhexyl epoxyhexahydrophthalate.

Specific examples of aliphatic diluent compounds suitable for the diluent component include polyglycidyl ethers of aliphatic polyhydric alcohols and the alkyleneoxide adducts of the aliphatic polyhydric alcohols; polyglycidyl esters of aliphatic long-chain polybasic acid, homopolymers synthesized by the vinyl polymerization of glycidyl acrylate or glycidyl methacrylate, and copolymers synthesized by the vinyl polymerization of glycidyl acrylate and another vinyl polymer. Representative compounds include glycidyl ethers of polyhydric alcohols, such as 1,4-butanediol diglycidyl ether, 1,6-hexanediol diglycidyl ether, triglycidyl ethers of glycerine, triglycidyl ethers of trimethylolpropane, tetraglycidyl ethers of sorbitol, hexaglycidyl ethers of dipentaerythritol, diglycidyl ethers of polyethylene glycol, diglycidyl ethers of polypropyleneglycol, polyglycidyl ethers of polyether polyol obtained by adding one, two or more kinds of alkyleneoxides with an aliphaticpolyhydric alcohol such as propyleneglycol, trimethylol propane or glycerine, and diglycidyl esters of aliphatic long-chain dibasic acids. In addition, monoglycidyl ethers of aliphatic higher alcohols, phenol, cresol, butylphenol, monoglycidyl ethers of polyether alcohols obtained by adding alkyleneoxide to them, glycidyl esters of higher aliphatic acids, epoxidized soy-bean oil, octyl epoxystarate, butyl epoxystearate, epoxidized linseed oil, epoxidized polybutadiene, and the like are exemplified.

Additional examples of diluent compounds suitable for the diluent component include oxetane compounds, such as trimethylene oxide, 3,3-dimethyl oxetane and 3,3-dichloromethyl oxetane; trioxanes, such as tetrahydrofuran and 2,3-dimethyltetrahydrofuran; cyclic ether compounds, such as 1,3-dioxolane and 1,3,6-trioxacyclooctane; cyclic lactone compounds, such as propiolactone, butyrolactone and caprolactone; thiirane compounds, such as ethylene sulfide; thiethane compounds, such as trimethylene sulfide and 3,3-dimethylthiethane; cyclic thioether compounds, such as tetrahydrothiophene derivatives; spiro ortho ester compounds obtained by a reaction of an epoxy compound and lactone; and vinyl ether compounds such as ethyleneglycol divinyl ether, alkylvinyl ether, 3,4-dihydropyran-2-methyl(3,4-dihydropyran-2-methyl(3,4-dihydrpyra- ne-2-carboxylate) and triethyleneglycol divinyl ether.

If present, the diluent component typically comprises the diluent compound in an amount sufficient to provide from greater than 0 to 30, alternatively from greater than 0 to 10, alternatively from 1 to 5, percent by weight of the diluent compound based on the total weight of the first composition or the second composition, respectively. These values generally reflect any cationic polymerizable diluent compound other than the silane compound in the diluent component, i.e., when a combination of different diluent compounds are utilized, the values above represent their collective amounts. In certain examples, the diluent component comprises the silane compound and the diluent compound.

In certain embodiments, each of the first and second compositions further comprises a catalyst. The catalyst of the first composition may be the same as or different than the catalyst of the second composition. Each catalyst independently is effective for enhancing curing of the respective composition. For example, when the first and second compositions are curable upon exposure to active-energy rays, the catalyst may be referred to as a photocatalyst. However, catalysts other than photocatalysts may be utilized, e.g. when the first and/or second compositions are cured upon exposure to heat as opposed to active-energy rays. The photocatalyst may alternatively be referred to as a photopolymerization initiator, and generally serves to initiation photopolymerization of the cationic polymerizable material and the diluent component. In certain embodiments, the first and second compositions independently comprise (A) an organopolysiloxane resin; and (B) a catalyst. The organopolysiloxane resin is described above. The catalyst may comprise any catalyst suitable for such polymerization. Examples of catalysts may include sulfonium salts, iodinium salts, selenonium salts, phosphonium salts, diazonium salts, paratoluene sulfonate, trichloromethyl-substituted triazine, and trichloromethyl-substituted benzene. Additional catalyst include acid generators, which are known in the art. The catalyst may increase rate of curing the composition, decrease time to onset of curing, increase extent of crosslinking of the composition, increase crosslink density of the cured product, or a combination of any two or more thereof. Typically, the catalyst at least increases the rate of curing the composition.

The sulfonium salts suitable for the catalyst may be expressed by the following formula: R⁷₃S⁺X⁻, where R⁷ may designated a methyl group, ethyl group, propyl group, butyl group, or a similar alkyl group with 1 to 6 carbon atoms; a phenyl group, naphthyl group, biphenyl group, tolyl group, propylphenyl group, decylphenyl group, dodecylphenyl group, or a similar aryl or a substituted-aryl group with 6 to 24 carbon atoms. In the above formula, X⁻ represents SbF₆⁻, AsF₆⁻, PF₆⁻, BF₄⁻, B(C₆F₅)₄⁻, HSO₄⁻, ClO₄⁻, CF₃SO₃⁻, or similar non-nucleophilic, non-basic anions. The iodonium salts can be represented by the following formula: R⁷₂I⁺X⁻, where R⁷ is the same as X⁻ defined above. The selenonium salt can be represented by the following formula: R⁷₃Se⁺X⁻, where R⁷, X⁻ are the same as defined above. The phosphonium salt can be represented by the following formula: R⁷₄P⁺X⁻, wherein R⁷, X⁻ are the same as defined above. The diazonium salt can be represented by the following formula: R⁷N₂⁺X⁻, where R⁷ and X⁻ are the same as defined above. The para-toluene sulfonate can be represented by the following formula: CH₃C₆H₄SO₃R⁸, wherein R⁸ is an organic group that contains an electron-withdrawing group, such as a benzoylphenylmethyl group, or a phthalimide group. The trichloromethyl-substituted triazine can be represented by the following formula: [CCl₃]₂C₃N₃R⁹, wherein R⁹ is a phenyl group, substituted or unsubstituted phenylethynyl group, substituted or unsubstituted furanylethynyl group, or a similar electron-withdrawing group. The trichloromethyl-substituted benzene can be represented by the following formula: CCl₃C₆H₃R⁷R¹⁰, wherein R⁷ is the same as defined above, R¹⁰ is a halogen group, halogen-substituted alkyl group, or a similar halogen-containing group.

Specific examples of catalysts suitable for the first and/or second compositions include triphenylsulfonium tetrafluoroborate, triphenylsulfonium hexafluoroantimonate, triphenylsulfonium trifurate, tri(p-tolyl)sulfonium hexafluorophosphate, p-tertiarybutylphenyl diphenylsulfonium hexafluoroantimonate, diphenyliodonium tetrafluoroborate, diphenyliodonium hexafluoroantimonate, p-tertiarybutylphenyl biphenyliodonium hexafluoroantimonate, di(p-tertiarybutylphenyl) iodonium hexafluoroantimonate, bis(dodecylphenyl)iodonium hexafluoroantimonate, triphenylselenonium tetrafluoroborate, tetraphenylphosphonium tetrafluoroborate, tetraphenylphosphonium hexafluoroantimonate, p-chlorophenyldiazonium tetrafluoroborate, benzoylphenyl paratolyenesulfonate, bistrichloromethylphenyl triazine, bistrichloromethyl furanyltriazine, p-bistrichloromethyl benzene, etc.

The catalyst may comprise two or more different species, optionally in the presence of a carrier solvent.

The catalyst may be present in the first and second compositions in independently varying amounts. Generally, the catalyst is present in an amount sufficient to initiate polymerization and curing upon exposure to active-energy rays (i.e., high-energy rays), such as ultraviolet rays. In certain examples, the catalyst is utilized in each of the first and second compositions in an amount of from greater than 0 to 5, alternatively from 0.1 to 4, percent by weight based on the total weight of the respective composition.

The first and/or second compositions may be solventless. In these examples, the diluent component generally solubilizes the cationic polymerizable material sufficient to pour and wet coat the first and/or second compositions. However, if desired, the first and/or second compositions may further comprise a solvent, e.g. an organic solvent. Solventless, as used herein with reference to the first and/or second compositions being solventless, means that total solvent, including any carrier solvent, may be present in the respective composition in an amount of less than 5, alternatively less than 4, alternatively less than 3, alternatively less than 2, alternatively less than 1, alternatively less than 0.1, percent by weight based on the total weight of the respective composition.

The solvent, if utilized, is generally selected for miscibility with the cationic polymerizable material and the diluent component. Generally, the solvent has a boiling point temperature of from 80°C to 200 °C at atmospheric pressure, which allows for the solvent to be easily removed via heat or other methods. Specific examples of solvents include isopropyl alcohol, tertiarybutyl alcohol, methylethylketone, methylisobutylketone, toluene, xylene, mesitylene, chlorobenzene, ethyleneglycoldimethylether, ethyleneglycoldiethylether, diethyleneglycoldimethylether, ethoxy-2-propanolacetate, methoxy-2-propanolacetate, octamethylcyclotetrasiloxane, hexamethyldisiloxane, etc. Two or more solvents may be utilized in combination.

The first and/or second compositions may optionally and additionally include any other suitable component(s), such as a coupling agent, an antistatic agent, an ultraviolet absorber, a plasticizer, a leveling agent, a pigment, a catalyst, an inhibitor of the catalyst, and so on. The inhibitor of the catalyst may function to prevent or slow rate of curing until the catalyst is activated (e.g. by removing or deactivating the inhibitor).

In certain examples, the first and second compositions are each in the form of a liquid with a dynamic viscosity of from 20 to 10,000 mPa·s at 25°C. The dynamic viscosities may be measured with a Brookfield Viscometer, an Ubbelohde tube, cone/plate rheology, or other apparatuses and methods. Although the values may vary slightly based on the instrument/apparatus utilized, these values are generally maintained regardless of measurement type.

The method and article of the invention are applicable for both passive-system elements and active-system elements. The following are examples of such applications: non-branched type optical waveguides, wave division multiplexers [WDM], branched optical waveguide, optical adhesives or similar passive light-transmitting elements, optical waveguide switches, optical attenuators, and optical amplifiers or similar active light-transmitting elements. Additional examples of suitable articles and applications in which the method and article may be utilized include volumetric phase gratings, Bragg gratings, Mach Zhender interferometers, lenses, amplifiers, cavities for lasers, acusto-optic devices, modulators, and dielectric mirrors.

One of skill in the art will readily recognize that the enumerated ranges and subranges disclosed herein may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1.

The invention is further described below with reference to the following illustrative examples.

### EXAMPLES

### Initial Composition:

An organopolysiloxane resin, a diluent component, and a catalyst were prepared and combined to form an initial composition, as described below.

To prepare the organopolysiloxane resin, a 5L round bottom flask was loaded with 437.7 g of phenylmethyldimethoxysilane, 55.5 g of bis(dimethylvinyl) disiloxane, 374.2 g of isobutyltrimethoxysilane, and 1000 g of toluene. 22.9 g of trifluoromethanesulfonic acid (5% in water) was then slowly disposed in the flask. Water was added to the flask at a rate of 31.1 g/min for 15 min to control the exothermic nature of the hydrolysis reaction within the flask. The flask temperature was maintained below 40 °C during the addition of water. A diphasic solution resulted. The diphasic solution was heated to reflux for 2 hours. After 2 hours, the flask was cooled to 50 °C, and the acid was neutralized with 7.5 g potassium hydroxide (30% in water). 222.18 g of trimethoxy[2-(7-oxabicyclo[4.1.0]hept-3-yl)ethyl]silane was disposed in the flask and the contents of the flask were again heated to reflux for 2 hours. The contents of the flask were then azeotropically distilled to dryness and held at 130 °C for 15 hours. The contents of the flask were cooled to 75 °C, and 4.8 g of silica-alumina catalyst support (grade 135) and 4.5 g of activated carbon were disposed in the flask. 200 g of toluene was disposed in the flask. The contents of the flask were then filtered over a 0.45 micron PTFE filter membrane to provide a clear liquid, which included a silicone resin. The clear liquid was concentrated to a silicone resin solution having a non-volatile content of 85% by rotary evaporation.

To prepare the diluent component, 512.8 g of triethylsilane were added dropwise to a solution of vinylcyclohexenemonoxide (668.1 g) and Rh(PPh₃)₃Cl (42 mg) under stirring at 95 °C. Upon addition of the triethylsilane, the exothermic reaction increased temperature to about 105 °C. The mixture was stirred for 12 hours at 95 °C to form a reaction mixture, which was twice distilled in an 18" jacketed distillation column. The resulting diluent component comprised a silane compound having a viscosity of about 7 cP at 25 °C.

50 g of the silicone resin were combined with 15.9 g of the diluent component and 2.65 g of 1,4-cyclohexenedimethanol diglycidyl ether to form a mixture. The mixture was blended and shaken. 1.46 g of a catalyst was added to the mixture, which was again shaken to form the initial composition having a refractive index RI⁴.

### First Composition

An organopolysiloxane resin, a diluent component, and a catalyst were prepared and combined to form a first composition, as described below.

To prepare the diluent component, 90.9 g of 4-vinyl-1-cyclohexene 1,2-epoxide, 6.5 g of a hydrosilylation catalyst, and 5 g of phenyldimethylsilane were disposed in a 500 mL round-bottomed flask and heated to 90 °C. 95 g of phenyldimethylsilane was added dropwise to the flask while maintaining a temperature below 110 °C. The contents of the flask were stirred at 95 °C for 36 hours to prepare the diluent component.

To prepare the first composition, 120 g of an epoxy-functional silicone resin (73.5% NVC in toluene) and 32.3 g of the diluent component were combined in a flask and the toluene was driven by rotary evaporation at 80 °C at -29.5 in Hg for three hours. A catalyst was added to the flask and the contents of the flask were then filtered over a 0.45 micron PTFE filter membrane to provide the first composition having a refractive index RI¹.

### Second Composition

An organopolysiloxane resin, a diluent component, and a catalyst were prepared and combined to form a second composition. The second composition was the same as the initial composition.

The second composition had a refractive index RI². Because the second composition was the same as the initial composition, RI² ∼ RI⁴.

### Application Example 1:

The initial composition was applied on a silicon support substrate via spin coating to form an initial layer. The initial layer had a thickness of 30 micrometers. The initial layer was irradiated with UV radiation with a broad spectrum photocuring tool with a high pressure mercury arc lamp, and the layer cured to form a bottom clad layer. A composite including the silicon support substrate and the bottom clad layer was then collectively referred to as the substrate below.

The first composition was applied on the substrate via spin coating to form a first layer. The first layer had a thickness of 50 micrometers. The first layer was selectively cured via a proximity lithography tool to provide a contrast layer including cured portions and uncured portions. The cured portions were about 50 micrometers in width. The uncured portions were not etched from the contrast layer.

The second composition was applied on the contrast layer via spin coating to form a second layer. The second layer had a thickness of from 30 to 50 micrometers. The second layer and the uncured portions of the contrast layer began to intermix. To accelerate this intermixing, a composite including the substrate, the contrast layer, and the second layer were subjected to thermal agitation (110 °C for 1 minute). The intermixed portion had a refractive index RI³.

Relative to the refractive indices of the various compositions, RI¹ > RI⁴; RI¹ > RI²; and RI² < RI³ < RI¹.

The intermixed portion and the second layer were cured by irradiating a composite including the substrate, the contrast layer, and the second layer to irradiation with a broad spectrum photocuring tool with a high pressure mercury arc lamp along with thermal agitation.

The article was cut via a dicing saw to form waveguides having dimensions of 50 micrometers x 50 micrometers x 10 cm. The cross-sectional areas of the waveguides were analyzed, which had excellent symmetry and which were free from swelling. Insertion loss was tested via a 5.7 micron single mode fiber for launch and a 62.5 micron multimode fiber for out-coupling into a photodetector.

### Comparative Example 1:

The same steps of Application Example 1 were carried out. However, the uncured portion of the contrast layer was etched with an organic solvent, e.g. mesitylene. This added significant method steps associated with etching. Further, there was significant material loss, and disposal of the uncured portion of the contrast layer and organic solvent was required.

The article was cut via a dicing saw to form waveguides having dimensions of 50 micrometers x 50 micrometers x 10 cm. The cross-sectional areas of the waveguides were analyzed, which were indistinguishable from those of Application Example 1. Insertion loss was tested via a 5.7 micron single mode fiber for launch and a 62.5 micron multimode fiber for out-coupling into a photodetector. The results were nearly indistinguishable from those of Application Example 1.

## Claims

1. A method of preparing an article, said method comprising:
applying a first composition having a first refractive index (RI¹) on a substrate to form a first layer comprising the first composition on the substrate;
applying a curing condition to a discrete target portion of the first layer, without applying the curing condition to a non-target portion of the first layer, to form a contrast layer including at least one cured portion and at least one uncured portion;
applying a second composition having a second refractive index (RI²) on the contrast layer to form a second layer;
mixing at least a portion of the second layer and the at least one uncured portion of the contrast layer to form at least one intermixed portion having a third refractive index (RI³) in the contrast layer; and
wherein the first and second composition and the at least one intermixed portion are different from one another;
wherein RI¹, RI², and RI³ are different from one another when measured at a same wavelength light and temperature; and
further comprising curing the second layer and the at least one intermixed portion of the contrast layer, thereby forming an article sequentially comprising the substrate, contrast layer including the at least one cured portion and at least one cured intermixed portion wherein the cured portions and the cured intermixed portions are arrayed in an alternating arrangement in the contrast layer, and a cured second layer.

2. The method of claim 1 wherein RI¹ > RI² and RI² < R1³ < RI¹.

3. The method of any one preceding claim wherein applying a curing condition to the discrete target portion of the first layer comprises irradiating the discrete target portion of the first layer with active-energy rays without irradiating the non-target portion of the first layer with the active-energy rays.

4. The method of any one preceding claim wherein mixing the at least one uncured portion of the contrast layer and at least a portion of the second layer comprises thermally agitating the at least one uncured portion of the contrast layer and at least a portion of the second layer to form the intermixed portion.

5. The method of any one preceding claim wherein the substrate comprises a bottom clad layer.

6. The method of claim 5 further comprising the step of forming the bottom clad layer prior to the step of applying the first composition thereon.

7. The method of any one preceding claim wherein each of the first and second compositions is curable upon exposure to active-energy rays.

8. The method of any one preceding claim wherein the first and second compositions independently comprise a silicone composition.

9. The method of claim 10 wherein the first and second compositions independently comprise:
(A) an organopolysiloxane resin; and
(B) a catalyst for enhancing curing of the organopolysiloxane resin.

10. The method of claim 1 wherein the at least one cured intermixed portion of the contrast layer and the cured second layer are the same.

11. The method of any one of claims 1 and 10 wherein curing the second layer and the at least one intermixed portion comprises heating a composite including the substrate, the contrast layer, and the second layer.

12. The method of any one preceding claim wherein the contrast layer has a thickness of from 1 to 100 microns.

13. The method of any one preceding claim wherein the article comprises an optical article.

14. The method of any one of claims 1, 10, and 11 wherein the article comprises a plurality of cured portions and a plurality of cured intermixed portions in the contrast layer.,

15. An article formed in accordance with the method of any one of claims 1-14.

## Patentansprüche

1. Ein Verfahren zum Herstellen eines Artikels, wobei das Verfahren Folgendes beinhaltet:
Anwenden einer ersten Zusammensetzung mit einem ersten Brechungsindex (RI¹) auf ein Substrat, um eine erste Schicht, beinhaltend die erste Zusammensetzung, auf dem Substrat zu bilden;
Anwenden einer Härtebedingung an einen diskreten Zielabschnitt der ersten Schicht, ohne die Härtebedingung an einen Nicht-Zielabschnitt der ersten Schicht anzulegen, um eine Kontrastschicht, einschließlich mindestens eines gehärteten Abschnitts und eines ungehärteten Abschnitts, zu bilden;
Anwenden einer zweiten Zusammensetzung mit einem zweiten Brechungsindex (RI²) auf die Kontrastschicht, um eine zweite Schicht zu bilden;
Mischen mindestens eines Abschnitts der zweiten Schicht und des mindestens einen ungehärteten Abschnitts der Kontrastschicht, um mindestens einen vermischten Abschnitt mit einem dritten Brechungsindex (RI³) in der Kontrastschicht zu bilden; und
wobei die erste und zweite Zusammensetzung und der mindestens eine vermischte Abschnitt sich voneinander unterscheiden;
wobei RI¹, RI² und RI³, wenn bei einer gleichen Lichtwellenlänge und Temperatur gemessen, sich voneinander unterscheiden; und
ferner beinhaltend das Härten der zweiten Schicht und des mindestens einen vermischten Abschnitts der Kontrastschicht, wodurch ein Artikel gebildet wird, der aufeinanderfolgend das Substrat, die Kontrastschicht einschließlich des mindestens einen gehärteten Abschnitts und des mindestens einen gehärteten vermischten Abschnitts, wobei die gehärteten Abschnitte und die gehärteten vermischten Abschnitte in einer sich abwechselnden Anordnung in der Kontrastschicht angeordnet sind, und eine gehärtete zweite Schicht beinhaltet.

2. Verfahren gemäß Anspruch 1, wobei RI¹ > RI² und RI² < RI³ < RI¹.

3. Verfahren gemäß einem vorhergehenden Anspruch, wobei das Anwenden einer Härtebedingung an den diskreten Zielabschnitt der ersten Schicht das Bestrahlen des diskreten Zielabschnitts der ersten Schicht mit energieaktiven Strahlen ohne das Bestrahlen des Nicht-Zielabschnitts der ersten Schicht mit den energieaktiven Strahlen beinhaltet.

4. Verfahren gemäß einem vorhergehenden Anspruch, wobei das Mischen des mindestens einen ungehärteten Abschnitts der Kontrastschicht und mindestens eines Abschnitts der zweiten Schicht das thermische Schütteln des mindestens einen ungehärteten Abschnitts der Kontrastschicht und mindestens eines Abschnitts der zweiten Schicht beinhaltet, um den vermischten Abschnitt zu bilden.

5. Verfahren gemäß einem vorhergehenden Anspruch, wobei das Substrat eine untere Verkleidungsschicht beinhaltet.

6. Verfahren gemäß Anspruch 5, ferner beinhaltend den Schritt des Bildens der unteren Verkleidungsschicht vor dem Schritt des Anwendens der ersten Zusammensetzung darauf.

7. Verfahren gemäß einem vorhergehenden Anspruch, wobei jede der ersten und zweiten Zusammensetzung bei Aussetzen an energieaktive Strahlen härtbar ist.

8. Verfahren gemäß einem vorhergehenden Anspruch, wobei die erste und zweite Zusammensetzung unabhängig eine Silikonzusammensetzung beinhalten.

9. Verfahren gemäß Anspruch 10, wobei die erste und zweite Zusammensetzung unabhängig Folgendes beinhalten:
(A) ein Organopolysiloxanharz; und
(B) einen Katalysator zum Verstärken des Härtens des Organopolysiloxanharzes.

10. Verfahren gemäß Anspruch 1, wobei der mindestens eine gehärtete vermischte Abschnitt der Kontrastschicht und die gehärtete zweite Schicht die gleichen sind.

11. Verfahren gemäß einem der Ansprüche 1 und 10, wobei das Härten der zweiten Schicht und des mindestens einen vermischten Abschnitts das Erhitzen eines Verbundwerkstoffs, einschließlich des Substrats, der Kontrastschicht und der zweiten Schicht beinhaltet.

12. Verfahren gemäß einem vorhergehenden Anspruch, wobei die Kontrastschicht eine Dicke von 1 bis 100 Mikrometer aufweist.

13. Verfahren gemäß einem vorhergehenden Anspruch, wobei der Artikel einen optischen Artikel beinhaltet.

14. Verfahren gemäß einem der Ansprüche 1, 10 und 11, wobei der Artikel eine Vielzahl von gehärteten Abschnitten und eine Vielzahl von gehärteten vermischten Abschnitten in der Kontrastschicht beinhaltet.

15. Ein in Übereinstimmung mit dem Verfahren gemäß einem der Ansprüche 1-14 gebildeter Artikel.

## Revendications

1. Un procédé de préparation d'un article, ledit procédé comprenant :
l'application d'une première composition ayant un premier indice de réfraction (RI¹) sur un substrat afin de former une première couche comprenant la première composition sur le substrat ;
l'application d'une condition de durcissement à une portion cible discrète de la première couche, sans l'application de la condition de durcissement à une portion non-cible de la première couche, afin de former une couche de contraste incluant au moins une portion durcie et au moins une portion non durcie ;
l'application d'une deuxième composition ayant un deuxième indice de réfraction (RI²) sur la couche de contraste afin de former une deuxième couche ;
le mélange d'au moins une portion de la deuxième couche et de l'au moins une portion non durcie de la couche de contraste afin de former au moins une portion entremêlée ayant un troisième indice de réfraction (RI³) dans la couche de contraste ; et
dans lequel la première et la deuxième composition et l'au moins une portion entremêlée sont différentes les unes des autres ;
dans lequel RI¹, RI², et RI³ sont différents les uns des autres lorsqu'ils sont mesurés à une lumière de même longueur d'onde et une même température ; et
comprenant en outre le durcissement de la deuxième couche et de l'au moins une portion entremêlée de la couche de contraste, formant ainsi un article comprenant séquentiellement le substrat, la couche contraste incluant l'au moins une portion durcie et l'au moins une portion durcie entremêlée, les portions durcies et les portions entremêlées durcies étant disposées selon un arrangement en alternance dans la couche de contraste, et une deuxième couche durcie.

2. Le procédé de la revendication 1 dans lequel RI¹ > RI² et RI² < R1³ < RI¹.

3. Le procédé de n'importe quelle revendication précédente dans lequel l'application d'une condition de durcissement à la portion cible discrète de la première couche comprend l'irradiation de la portion cible discrète de la première couche par des rayons d'énergie active sans irradiation de la portion non-cible de la première couche par des rayons d'énergie active.

4. Le procédé de n'importe quelle revendication précédente dans lequel le mélange de l'au moins une portion non durcie de la couche de contraste et d'au moins une portion de la deuxième couche comprend l'agitation thermique de l'au moins une portion non durcie de la couche de contraste et d'au moins une portion de la deuxième couche afin de former la portion entremêlée.

5. Le procédé n'importe quelle revendication précédente dans lequel le substrat comprend une couche de gaine inférieure.

6. Le procédé de la revendication 5 comprenant en outre l'étape de formation de la couche de gaine inférieure avant l'étape d'application de la première composition sur celle-ci.

7. Le procédé n'importe quelle revendication précédente dans lequel chacune des première et deuxième compositions peut être durcie par exposition à des rayons d'énergie active.

8. Le procédé n'importe quelle revendication précédente dans lequel les première et deuxième compositions comprennent indépendamment une composition de silicone.

9. Le procédé de la revendication 10 dans lequel les première et deuxième compositions comprennent indépendamment :
(A) une résine d'organopolysiloxane ; et
(B) un catalyseur pour l'amélioration du durcissement de la résine d'organopolysiloxane.

10. Le procédé de la revendication 1 dans lequel l'au moins une portion entremêlée durcie de la couche de contraste et la deuxième couche durcie sont les mêmes.

11. Le procédé de n'importe laquelle des revendications 1 et 10 dans lequel le durcissement de la deuxième couche et de l'au moins une portion entremêlée comprend le chauffage d'un composite incluant le substrat, la couche de contraste, et la deuxième couche.

12. Le procédé n'importe quelle revendication précédente dans lequel la couche de contraste a une épaisseur allant de 1 à 100 microns.

13. Le procédé n'importe quelle revendication précédente dans lequel l'article comprend un article optique.

14. Le procédé de n'importe laquelle des revendications 1, 10 et 11 dans lequel l'article comprend une pluralité de portions durcies et une pluralité de portions entremêlées durcies dans la couche de contraste.

15. Un article formé conformément au procédé de n'importe laquelle des revendications 1 à 14.
